Europäisches Patentamt

(19) **European Patent Office**

**Office européen des brevets**

(11) Numéro de publication: **0 298 175**
**B1**

(12) **FASCICULE DE BREVET EUROPEEN**

(45) Date de publication du fascicule du brevet:
**03.01.90**

(51) Int. Cl.⁴: **G01N 33/18**

(21) Numéro de dépôt: **87401354.3**

(22) Date de dépôt: **17.06.87**

(54) **Procédé d'étalonnage d'un automate de dosage de composés hydrocarbonés en milieu aqueux.**

(43) Date de publication de la demande:
**11.01.89 Bulletin 89/2**

(45) Mention de la délivrance du brevet:
**03.01.90 Bulletin 90/1**

(84) Etats contractants désignés:
**BE DE ES GB IT NL**

(56) Documents cités:
FR-A- 2 351 404
FR-A- 2 524 641

**CHEMICAL ABSTRACTS,**
vol. 81, no. 19, 11 novembre 1974, résumé no. 119342a,
Columbus, Ohio, US; B.Z. GORBUNOV et al.: "Infrared
spectroscopic study of the structure of aqueous
solutions with nonelectrolyte-strong proton
acceptors", & ZH. STRUKT.
KHIM. 1974, 15(3), 403-9)-14-fluoro-, and
(+)-13(E)-15-epi-14-fluoroprostaglandin F2alpha" 000

(73) Titulaire: **COMPAGNIE GENERALE DES EAUX SA dite:,
52 rue d'Anjou, F-75384 Paris Cedex 08(FR)**
Titulaire: **SYNDICAT DES EAUX D'ILE DE FRANCE
Etablissement public dit:, Tour de Lyon 185 rue de
Bercy, F-75012 Paris(FR)**

(72) Inventeur: **Gibert, Michel, 48 rue des Martyrs,
F-75009 Paris(FR)**

(74) Mandataire: **Cuer, André, CABINET CUER 30, rue de
Léningrad, F-75008 Paris(FR)**

## Description

La Présente invention a trait au domaine de l'analyse des composés hydrocarbonés contenus dans un milieu aqueux, comme par exemple la recherche et la détermination des hydrocarbures totaux renfermés dans une eau polluée. Elle a trait tout particulièrement à un procédé d'étalonnage d'un analyseur automatique ou automate destiné à doser en continu les quantités d'agent hydrocarboné dans l'eau.

Lorsqu'il s'agit d'analyser au laboratoire ou de façon non périodique un taux de composé hydrocarboné (appelé ci-après hydrocarbure, dans un but de simplification) dans l'eau, on peut se contenter d'étalonner le dispositif de mesure à partir de solutions d'hydrocarbures dans un solvant non aqueux choisi, transparent aux rayons infra-rouges du fait que la majorité des mesures s'effectue à l'aide de spectrophotomètres I.R.

Pour entreprendre des analyses en continu et de façon systématique il faut disposer d'un automate dont la solution étalon doit alors subir les différentes étapes du processus de mesure dont : efficacité des étapes de rinçage pour assurer la propreté rigoureuse du circuit, bon fonctionnement de l'extraction, détection fiable. Dans les automates qui existent à l'heure actuelle, l'étalonnage, au moyen d'une réserve de solution étalon, s'effectue lors de la phase précitée de détection. Il n'est alors pratiquement pas possible de vérifier que l'ensemble du système présente un fonctionnement convenable et sûr.

Certes, un moyen idéal de constituer un étalon pour un automate du type précité serait de disposer d'une eau contenant une quantité extrêmement faible d'hydrocarbure. Toutefois, ceci est difficilement envisageable du fait des difficultés d'introduire une quantité connue d'hydrocarbures de façon homogène dans de l'eau.

Conformément à une autre technique connue pour l'obtention de solutions aqueuses étalons à faible teneur en composés organiques peu solubles dans l'eau, on peut faire appel à un tiers solvant qui soit à la fois totalement miscible à l'eau, un bon solvant du composé hydrocarboné étalon, et transparent aux rayons infra-rouges pour éviter les interférences. Selon un tel procédé, une quantité faible, mais mesurable avec précision, d'une solution mère dans le tiers solvant est introduit sous agitation dans l'eau.

Toutefois, les solvants organiques couramment utilisés au laboratoire ne peuvent convenir du fait qu'ils renferment des squelettes hydrocarbonés et que, par ailleurs, ils ont une solubilité non négligeable dans le solvant utilisé pour l'extraction des hydrocarbures. Il en résulte des phénomènes d'interférence dans les signaux émis, par exemple en spectrophotométrie infra-rouge.

L'invention permet de pallier les difficultés susmentionnées et de résoudre le problème de l'étalonnage d'un automate par une solution ou dispersion d'hydrocarbure dans l'eau, facile à préparer et à conserver et permettant d'obtenir des résultats fiables et répétitifs.

Conformément à l'invention, on utilise comme tiers solvant des composés organiques sous forme deutériée.

De tels produits, commercialisés pour usage dans la technique de Résonnance Magnétique Nucléaire du proton, ont la particularité d'avoir des propriétés chimiques et physiques très proches de leur forme hydrogénée sans pour autant présenter de signal, par exemple en infra-rouge, caractéristique de la présence d'un composé hydrocarboné.

Parmi les produits deutériés aptes à satisfaire aux caractéristiques visées par l'invention, on peut citer, à titre préférentiel mais non limitatif : l'acétone deutérié (D6), l'éthanol deutérié (D6), le méthanol deutérié (D4), le tétrahydrofurane deutérié (D8)...

En pratique, on prépare une solution mère de l'hydrocarbure étalon dans le solvant deutérié. Puis on introduit dans l'eau sous agitation, avec une seringue de précision, une faible quantité de cette solution mère, par exemple de l'ordre de $10^{-4}$l par litre d'eau. La concentration de la solution mère est choisie de telle façon que la concentration finale d'un composé hydrocarboné dans l'eau (à rechercher) corresponde à l'étalon que l'on souhaite, cette dernière étant généralement comprise entre $10^{-5}$ et $10^{-3}$ grammes par litre d'eau. Les prises d'essais à analyser, par exemple dans le cas d'eau polluée, sont habituellement de l'ordre de 500 ml à 1 litre.

Comme déjà signalé, un automate étalonné selon l'invention permet de déterminer l'ensemble des composés hydrocarbonés, exprimés en hydrocarbures totaux, contenus à titre d'impuretés dans un milieu aqueux, comme par exemple une eau polluée à purifier. Parmi ces impuretés hydrocarbonées les plus couramment rencontrées, on peut citer par exemple, à titre illustratif : l'essence, le kérozène, des fuels légers ou lourds... etc.

A titre d'exemples de réalisation non limitatifs conformes à l'invention, on peut citer les expérimentations et confections d'étalons ci-dessous :

a) Etude comparative de tiers solvants

Après avoir procédé à la préparation de solutions de 0,2 ml de solvants organiques tels que de l'éthanol, de l'acétone et du tétrahydrofurane, dans 800 ml d'eau, en l'absence d'hydrocarbure, on a procédé à l'extraction et à la mesure en infra-rouge selon la technique classique.

On a observé en I.R., pour ces 3 produits, des signaux importants dus aux interférences avec le squelette hydrocarboné desdits produits. On devait donc exclure leur usage pour la constitution de solutions étalons d'hydrocarbures.

Au contraire, en procédant exactement de la même façon mais avec un composé deutérié correspondant, comme par exemple de l'acétone D6, aucun signal interférant n'a pu être décelé.

b) Réalisation d'une solution étalon

Pour obtenir une solution étalon du type de l'invention, par exemple à partir d'acétone deutérié, on a préparé d'abord une "solution-mère" en pesant 0,100 g d'hydrocarbure (ou composé hydrocarboné-test) dans une fiole jaugée de 50 ml puis en ajoutant de l'acétone D6 jusqu'au trait de jauge et en agitant bien pour homogénéiser. La concentration de la solution-mère en hydrocarbure était donc de 2 g/l.

Ensuite une "solution-fille" a été obtenue en diluant au 1/20ème la solution mère par de l'acétone D6. La concentration de la solution fille en hydrocarbure était de 0,1 g/l.

On a injecté sous agitation, à l'aide d'une seringue de précision, des quantités variables de solution mère ou solution fille dans 800 ml d'eau de façon à réaliser une gamme étalon, par exemple du type :

| quantité injectée | Concentration de l'étalon en hydrocarbure |
|---|---|
| $5 \cdot 10^{-4}$ l de solution fille | $62,5 \cdot 10^{-6}$ g/l |
| $5 \cdot 10^{-5}$ l de solution fille | $125 \cdot 10^{-6}$ g/l |
| $10^{-4}$ l de solution mère | $25 \cdot 10^{-5}$ g/l |

On peut bien entendu obtenir des résultats du même type avec d'autres solvants deutériés, tels que notamment ceux cités ci-dessus.

**Revendications**

1. Procédé d'étalonnage d'un automate destiné à mesurer la quantité d'hydrocarbures totaux contenus dans un milieu aqueux par utilisation d'un tiers solvant organique totalement miscible à l'eau et bon solvant du composé hydrocarboné étalon, caractérisé en ce que l'on utilise comme tiers solvant un solvant organique sous forme deutériée.

2. Procédé selon la revendication 1, caractérisé en ce que le solvant deutérié est choisi dans le groupe des composés en usage pour les analyses par Résonnance Magnétique Nucléaire, dont l'acétone deutérié, le méthanol deutérié ou le tétrahydro-furane deutérié.

3. Procédé selon l'une quelconque des revendications 1 ou 2, caractérisé en ce que la quantité de solvant deutérié mise en oeuvre est calculée pour avoir une gamme de concentrations finales dans l'eau de l'hydrocarbure (ou composé hydrocarboné) comprise entre $10^{-5}$ et $10^{-3}$ g/l.

4. Application du procédé selon l'une quelconque des revendications 1 à 3 à l'analyse automatique d'une eau polluée par des composés hydrocarbonés.

**Claims**

1. Process for gauging an automaton intended to determine the quantity of the whole content of hydrocarbons in an aqueous medium by using a third organic solvent entirely miscible with water and good solvent for the hydrocarbon compound, characterized by the fact it is used, as third solvent, an organic solvent under deuteried form.

2. Process according the claim 1, wherein, the deuteried solvent is selected from the group of the compounds used for the analysis by Nuclear Magnetic Resonance, amongst them: deuteried acetone, deuteried methanol, deuteried tetrahydrofuran.

3. Process according any one of the claims 1 or 2, wherein the quantity of used deuteried solvent is calculated to have a scale of final concentrations in water of the hydrocarbon compound comprised between $10^{-5}$ and $10^{-3}$ g/l.

4. Application of the process according any one of the claims 1 to 3 for the automatic analysis of a water polluted by hydrocarbon compounds.

**Patentansprüche**

1. Vergleichsmeßverfahren für einen Automaten zur Messung des Gesamtgehaltes in Kohlenwasserstoffen in einem wässerigen Milieu unter Verwendung eines Drittels eines organischen, in Wasser vollständig mischbaren und eine zu bestimmende kohlenstoffhaltige Verbindung gut lösendes Lösungsmittels, gekennzeichnet durch die Verwendung eines Drittels organischen deutrierten Lösungsmittels.

2. Verfahren nach Anspruch 1, dadurch gekennzeihnet, daß das deuterierte Lösungsmittel aus der Gruppe der Verbindungen gewählt ist, die für Analysen nach der Kernresonanzspektroskopie (NMR) verwendet werden, wie deuteriertes Aceton, deuteriertes Methanol oder deuteriertes Tetrahydrofuran.

3. Verfahren nach einem der Ansprüche 1 oder 2, dadurch gekennzeichnet, daß die Menge des eingesetzten deuterierten Lösungsmittels so gewählt ist, daß die Endkonzentration der Kohlenwasserstoffe im Wasser (oder der Kohlenwasserstoffverbindung) zwischen $10^{-5}$ und $10^{-3}$ g/l beträgt.

4. Anwendung des Verfahrens nach einem der Ansprüche 1 – 3 für die automatische Analyse eines durch Kohlenwasserstoffverbindungen verunreinigten Wassers.